# EUROPÄISCHE PATENTSCHRIFT

(11) **EP 1 068 486 B1**
(45) Veröffentlichungstag und Bekanntmachung des Hinweises auf die Patenterteilung: **23.01.2002**
(21) Anmeldenummer: 99913296.2
(22) Anmeldetag: 24.03.1999
(51) Int. Cl.: G01B 9/02

(54) **POSITIONSMESSEINRICHTUNG**
POSITION MEASURING DEVICE
DISPOSITIF DE MESURE DE POSITION

(30) Priorität: 04.04.1998 DE 19815241
(43) Veröffentlichungstag der Anmeldung: 17.01.2001
(73) Patentinhaber: Dr. Johannes Heidenhain GmbH, 83292 Traunreut (DE)
(72) Erfinder: SPANNER, Erwin, D-83278 Traunstein (DE); THIEL, Jürgen, D-83278 Traunstein (DE)
(86) Internationale Anmeldenummer: EP9902005
(87) Internationale Veröffentlichungsnummer: WO9951937

(56) Entgegenhaltungen:
- EP-B- 0 305 438

## Beschreibung

Die vorliegende Erfindung betrifft eine Positionsmeßeinrichtung, die zur Messung von Relativbewegungen geeignet ist und desweiteren eine Möglichkeit zur Herstellung eines Absolutbezuges bei der Positionsbestimmung aufweist.

Herkömmliche Interferometer, die als Positionsmeßeinrichtungen zur Bestimmung der Position zueinander beweglicher Teile eingesetzt werden, ermöglichen in der Regel lediglich Relativmessungen. Dies bedeutet beispielsweise, daß im Fall der Linear-Bewegung ausgehend von einem Startpunkt die bei der Bewegung zurückgelegte Strecke in Bruchteilen der jeweiligen Interferometer-Wellenlänge bestimmbar ist. Im praktischen Einsatz, wenn etwa Interferometer als Einbaumeßsysteme in Werkzeugmaschinen eingesetzt werden sollen, ist es jedoch mitunter wünschenswert, wenn bei der Positionsbestimmung auch ein Absolutbezug zu einem definierten Ort bekannter Lage im Meßbereich hergestellt werden kann.
Im Fall des Einsatzes von konventionellen inkrementalen Meßsystemen, die auf der Abtastung einer periodischen Maßstabteilung beruhen, erfolgt die Herstellung des Absolutbezuges üblicherweise mittels sogenannter Referenzmarkierungen, die auf der Maßstabseite an bekannten Positionen angeordnet sind. Hierbei sind verschiedenste Arten derartiger Referenzmarkierungen bekannt, z.B. sogenannte abstandscodierte Referenzmarkierungen oder aber Referenzmarkierungen an definierten Orten. Die Abtastung der Referenzmarkierungen liefert jeweils Referenzimpulssignale, die von einer nachgeordneten Auswerteeinheit weiterverarbeitet werden können.

In der EP 0 305 438 B1 oder aber der DE 195 06 954 A1 wird deshalb vorgeschlagen, mit dem beweglichen Meßreflektor eines relativ-messenden Interferometers eine optische Abtasteinheit zu verbinden und damit eine parallel zur Meßstrecke angeordnete Maßstabteilung in bekannter Weise abzutasten. Auf dem Maßstab sind Referenzmarkierungen an definierten Positionen angeordnet. Auf diese Art und Weise kann auch bei relativ-messenden Interferometern, die zur Messung der Position zweier zueinander beweglicher Teile eingesetzt werden, ein Absolutbezug während der Positionsmessung hergestellt werden.
Nachteilig an diesen Varianten ist nunmehr, daß die Interferometer-Teilstrahlenbündel im Referenz- und Meßstrahlengang an der jeweiligen Referenzposition unterschiedliche optische Wege zurückgelegt haben und demzufolge auch unterschiedlich von Schwankungen der Umgebungsbedingungen beeinflußt werden. Desweiteren dehnt sich die Maßstabteilung temperaturabhängig aus, wobei der Temperatureinfluß auf die Ausdehnung der Maßstabteilung deutlich größer ist als auf die als Meßnormal dienende Laser-Wellenlänge. Es existiert somit kein gleichbleibender Zusammenhang zwischen dem temperaturbedingten Verhalten der Maßstabteilung und der Laser-Wellenlänge. Die Bestimmung der jeweiligen Absolutposition ist bei diesen Lösungen demzufolge mit umgebungsbedingten Ungenauigkeiten behaftet.
Als weiterer Nachteil dieser vorgeschlagenen Varianten ist aufzuführen, daß jeweils sichergestellt werden muß. daß die Signalleitungen, die die in Meßrichtung bewegliche Abtasteinheit mit einer nachgeordneten Signalverarbeitungseinheit verbinden, im Meßbetrieb sicher geführt werden. Hierzu sind aufwendige Systeme zur Kabelführung erforderlich.

Im Zusammenhang mit der Erzeugung von Referenzimpulssignalen bei relativ-messenden Interferometern sei desweiteren auf die JP 8-5767 oder aber auf die US 4,191,916 verwiesen. In beiden Dokumenten wird mit Hilfe eines optischen Schalters ein Referenzimpulssignal an einer definierten Position entlang des Meßweges erzeugt. Als nachteilig an einer derartigen Losung zur Erzeugung eines Referenzimpulssignales ist anzusehen, daß die Herstellung des Absolutbezuges im Vergleich zur hochauflösenden Interferometer-Relativmessung nur mit einer vergleichsweise geringen Genauigkeit erfolgt.

Aufgabe der vorliegenden Erfindung ist es daher, für eine relativ-messende Positionsmeßeinrichtung, insbesondere ein Interferometer, eine Möglichkeit anzugeben, ein hochauflösendes Referenzimpulssignal an mindestens einer definierten Absolutposition zu erzeugen. Wünschenswert ist dabei ein möglichst einfacher Aufbau der entsprechenden Vorrichtung sowie eine hinreichend große Stabilität der Messung gegenüber eventuell schwankenden Umgebungsbedingungen im Meßbereich.

Diese Aufgabe wird gelöst durch eine Positionsmeßeinrichtung mit den Merkmalen des Anspruches 1.

Vorteilhafte Ausführungsformen der erfindungsgemäßen Positionsmeßeinrichtung ergeben sich aus den Maßnahmen in den abhängigen Ansprüchen.

Erfindungsgemäß wird nunmehr vorgesehen, mit Hilfe eines geeigneten Strahlteilerelementes das von einer Lichtquelle gelieferte Strahlenbündel in zwei vorzugsweise parallele Teilstrahlenbündel für den Meß- und den Referenzstrahlengang eines Interferometers aufzuteilen. Im Referenzstrahlengang ist ein ortsfester Referenzreflektor angeordnet, mit dem wiederum eine Abtasteinheit verbunden ist. die u.a. zur Erzeugung eines Referenzimpulssignales dient. Der Referenzreflektor ist hierbei vorzugsweise an derjenigen Position entlang des Meßweges angeordnet, die als Absolutposition zu erfassen ist. also beispielsweise an einem Maschinen-Nullpunkt. Im Meßstrahlengang befindet sich der in Meßrichtung bewegliche Meßreflektor, an dem mindestens eine Referenzmarkierung angeordnet ist. Über die am Referenzreflektor angeordnete Abtasteinheit wird damit in einer besonders vorteilhaften Ausführungsform ein Referenzimpulssignal bei identischen optischen Weglängen im Meß- und Referenzstrahlengang erzeugt. Die resultierenden Ausgangssignale der Abtasteinheit werden neben den vom Interferometer erzeugten Positionssignalen bzgl. der Relativbewegung zur Weiterverarbeitung einer Signalverarbeitungseinheit zugeführt.
Grundsätzlich kann die Abtasteinheit und die Referenzmarkierung auch am jeweils anderen Reflektor angeordnet werden.

Die erfindungsgemäße Lösung stellt nunmehr sicher, daß bei der zu detektierenden Absolutposition die Meß- und Referenzstrahiengänge des Interferometers stets den gleichen Umgebungsbedingungen ausgesetzt sind. Eine unterschiedliche Beeinflussung der beiden Strahlengänge kann an dieser Position des beweglichen Meßreflektors, die möglichst hochexakt bestimmt werden soll, demzufolge vermieden werden. Dies kann durch die Wahl eines geeigneten Strahlteilerelementes noch verbessert werden, wenn dadurch sichergestellt ist, daß die jeweils durchlaufenen optischen Wege im eingesetzten Strahlteilerelement möglichst exakt identisch sind und die beiden Teil-Strahlengänge möglichst wenig beabstandet voneinander parallel verlaufen.

Desweiteren erweist sich in einer vorteilhaften Ausführungsform als günstig, daß nunmehr am stationären Referenzreflektor eine Abtasteinheit angeordnet wird, über die letztlich das Referenzimpulssignal erzeugt wird. Eine aufwendige Kabelführung zu einer in Meßrichtung beweglichen Abtasteinheit kann damit vermieden werden. Die erforderlichen Signalleitungen von der Abtasteinheit zur nachgeordneten Signalverarbeitungseinheit müssen demzufolge lediglich einmal definiert verlegt werden.

Im Zusammenhang mit der gewählten Abtastung der Referenzmarkierung und der Ausgestaltung der entsprechenden Abtasteinheit existieren im Rahmen der vorliegenden Erfindung selbstverständlich verschiedenste Möglichkeiten. So können neben einer optischen bzw. photoelektrischen Abtastung desweiteren auch andere physikalische Abtastprinzipien eingesetzt werden. Ebenso können unterschiedlichste Interferometer-Varianten in Verbindung mit der erfindungsgemäßen Positionsmeßeinrichtung zum Einsatz kommen, beispielsweise neben Homodyn- auch Heterodyn-Interferometer usw..

Weitere Vorteile sowie Einzelheiten der vorliegenden Erfindung ergeben sich aus der nachfolgenden Beschreibung eines Ausführungsbeispieles anhand der beiliegenden Zeichnungen.

Dabei zeigt
- Figur 1: ein schematisiertes Blockschaltbild eines Ausführungsbeispieles der erfindungsgemäßen Positionsmeßeinrichtung in Verbindung mit einer Signalverarbeitungseinheit;
- Figur 2a: eine schematische Darstellung einer möglichen Ausführungsform der erforderlichen Abtasteinheit in einer seitlichen Schnittansicht;
- Figur 2b: eine schematisierte Draufsicht auf eine am Meßreflektor angeordnete Referenzmarkierung in Verbindung mit einer desweiteren dort vorgesehenen Inkrementalteilungsspur.

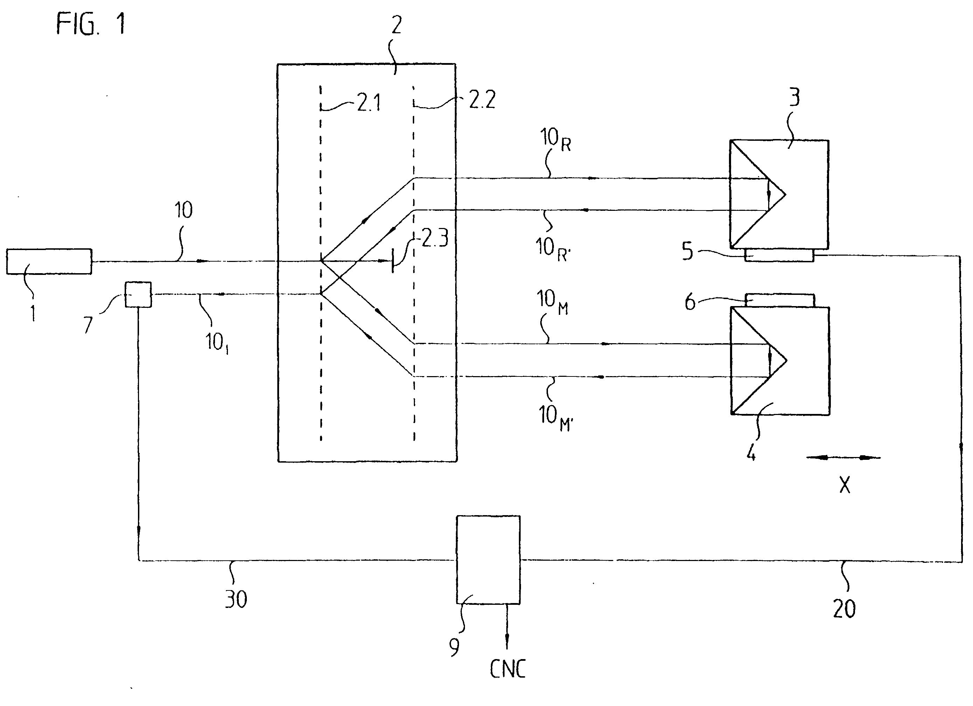

Anhand des in der schematischen Darstellung von Figur 1 gezeigten Ausführungsbeispieles sei nachfolgend die vorliegende Erfindung erläutert. Selbstverständlich handelt es sich beim gezeigten Aufbau lediglich um eine schematisierte Prinzipdarstellung, d.h. im Rahmen der erfindungsgemäßen Überlegungen sind selbstverständlich verschiedenste Abwandlungen etc. möglich.

Die Positionsmeßeinrichtung des Ausführungsbeispieles aus Figur 1 umfaßt ein Interferometer mit einer Lichtquelle 1. die ein Strahlenbundel 10 mit der Wellenlänge λ in Richtung eines Strahlteilerelementes 2 aussendet. Als geeignete Lichtquelle kommen etwa verschiedenste Laser in Betracht, beispielsweise He-Ne-Laser, Halbleiter-Laser etc.. Über das Strahlteilerelement 2 erfolgt eine Aufteilung des eintretenden Strahlenbündels 10 in zwei Teilstrahlenbündel 10_{R}, 10_{M}, die nach dem Verlassen des Strahlteilerelementes 2 parallel zueinander orientiert sind.

Im Ausführungsbeispiel der Figur 1 ist ein Zwei-Gitter-Strahlteiler als Strahlteilerelement 2 vorgesehen, bestehend aus zwei parallel zueinander angeordneten Beugungsgittern 2.1, 2.2, an denen jeweils eine Beugung bzw. Aufteilung der auftreffenden Strahlenbündel erfolgt. Im gezeigten Ausführungsbeispiel wird das von der Lichtquelle 1 kommende Strahlenbündel 10 in die +/- 1 sowie 0. Beugungsordnung aufgeteilt und die 0. Beugungsordnung zwischen den beiden Beugungsgittern 2.1, 2.2 mittels einer Blende 2.3 ausgeblendet. Nach erneuter Beugung der beiden Teilstrahlenbündel verlassen zwei parallele Teilstrahlenbündel 10_{R}, 10_{M} das Strahlteilerement 2 in Richtung eines Referenz- und Meßstrahlenganges.
In Bezug auf das in dieser Ausführungsform eingesetzte Strahlteilerelement 2 sei an dieser Stelle desweiteren auf die EP 0 670 467 B1 der Anmelderin verwiesen. Selbstverständlich können neben dieser Ausführung eines Strahlteilerelementes auch alternative Ausführungsformen in Betracht kommen. Hierzu zählen etwa verschiedenste bekannte Prismen-Bauformen, wie etwa Kösters- oder Dove-Prismen, Strahlteilerplatten bzw. funktional gleichwertige optische Systeme. Vorteilhaft erweist sich bei den jeweils eingesetzten Strahlteilerelementen jeweils, wenn die eintretenden Strahlenbündel derart aufgeteilt werden, daß nach dem Austritt aus dem Strahlteilerelement 2 die mindestens zwei Teilstrahlenbündel 10_{R}, 10_{M} parallel zueinander verlaufen.

Im Referenzstrahlengang des Interterometers ist ein Referenzreflektor 3 stationär angeordnet, auf den das erste Teilstrahlenbündel 10_{R} auftrifft. Im Meßstrahlengang ist ein in Meßrichtung x verschiebbarer Meßreflektor 4 angeordnet, auf den das zweite Teilstrahlenbündel 10_{M} auftrifft und dessen Relativ- bzw. Absolutposition bestimmt werden soll.
Im gezeigten Ausführungsbeispiel sind die beiden Reflektoren 3, 4 im Meß- und Referenzstrahlengang des Interferometers jeweils als Tripelprismen ausgebildet, die Reflektorflächen aufweisen, die in einem bestimmten Winkel zueinander orientiert sind. Grundsätzlich könnten an dieser Stelle selbstverständlich auch andere retroreflektierende optische Elemente als geeignete Reflektoren eingesetzt werden, wie beispielsweise Tripelspiegel, Planspiegel oder aber sog. "Katzenaugen".

Nach der Rück-Reflexion der beiden Teilstrahlenbündel 10_{R}, 10_{M} an Meß- und Referenzreflektor 3, 4 gelangen die Teilstrahlenbündel 10_{R}', 10_{M}' wiederum auf das Strahlteilerelement 2, werden dort überlagert bzw. zur Interferenz gebracht. Das resultierende Interferenz-Strahlenbündel 10₁ trifft nach dem Verlassen des Strahlteilerelementes 2 auf ein optoelektronisches Detektorelement 7, dessen verschiebungs-abhängig modulierte Ausgangssignale über eine Signalübertragungsleitung 30 einer nachgeordneten Signalverarbeitungseinheit 9 zugeführt werden. Das in Richtung des Detektorelementes 7 austretende Interferenz-Strahlenbündel 10₁ ist aufgrund der entsprechenden Wahl des Strahlteilerelementes 2 parallel zum Strahlenbundel 10 ausgerichtet, welches von der Lichtquelle 1 ausgesandt wird. Die Auswertung der Interferenzsignale zur Relativ-Positionsbestimmung des Meßreflektors 4 bzw. des damit verbundenen Teiles erfolgt hierbei in bekannter Art und Weise, so daß derart eine Information bezüglich der Relativbewegung des Meßreflektors 4 in Meßrichtung x zur Verfügung steht. Je nach gewahlter Auswertung der Interferenzsignale kann die Relativposition des Meßreflektors 4 in Inkrementen bzw Meßschntten bestimmt werden, die einem vorgegebenen Bruchteil der Welleniange λ der Lichtquelle 1 entsprechen, beispielsweise λ/8.

Im gezeigten Ausführungsbeispiel der erfindungsgemäßen Positionsmeßeinrichtung erfolgt eine erste Verarbeitung der Interferometer-Signale in der Signalverarbeitungseinheit 9, die auf Seiten der Positionsmeßeinrichtung angeordnet ist. Die Signalverarbeitung kann hierbei in Form einer Signalverstärkung, Signalkorrektur, Signalperiodenvariation, Bestimmung absoluter Positionsdaten etc. erfolgen. Von der Signalverarbeitungseinheit 9 aus werden die derart verarbeiteten oder aufbereiteten Positionsdaten dann anschließend an eine - nicht gezeigte - Auswerteeinheit übertragen; hierbei kann es sich im Fall des Einsatzes der erfindungsgemäßen Positionsmeßeinrichtung in einer Werkzeugmaschine um eine bekannte numerische Werkzeugmaschinensteuerung CNC handeln.

Selbstverständlich ist die gezeigte Interferometer-Variante mit lediglich einem optoelektronischen Detektorelement 7 nur schematisch zu verstehen, d.h. im Rahmen der vorliegenden Erfindung können in bekannter Art und Weise mittels polarisationsoptischer Elemente in den Strahlengängen auch um 90° phasenverschobene Interferenzsignale erzeugt werden. Diese werden dann mit Hilfe mindestens zweier Detektorelemente erfaßt und der Signalverarbeitungseinheit 9 zugeführt. Derart steht dann auch eine Richtungsinformation bezüglich der Bewegung des Meßreflektors 4 zur Verfügung. Aus Gründen der besseren Übersichtlichkeit wurde lediglich der prinzipielle Interferometer-Strahlengang gezeigt.
Um nunmehr erfindungsgemäß auch einen Absolutbezug während der interferometrischen Relativmessung herstellen zu können, ist auf Seiten des stationären Referenzreflektors 3 eine Abtasteinheit 5 vorgesehen. Die am Referenzreflektor 3 in einer definierten Relativposition angeordnete Abtasteinheit 5 ist in der Darstellung der Figur 1 lediglich schematisch angedeutet und dient primär zur Erzeugung eines Abtastsignales bzw. Referenzimpulssignales an mindestens einer definierten Position des beweglichen Meßreflektors 4. Hierzu erfolgt die Abtastung einer Referenzmarkierung, die auf Seiten des beweglichen Meßreflektors 4 angeordnet ist. Im dargestellten Ausführungsbeispiel ist die Referenzmarkierung dabei über eine Referenzmarkierungseinheit 6 am Meßreflektor 4 angeordnet. Alternativ hierzu wäre jedoch auch denkbar, unmittelbar am Meßreflektor 4 eine derartige Referenzmarkierung anzubringen.

Desweiteren sei an dieser Stelle darauf hingewiesen, daß grundsätzlich auch eine Anordnung der Abtasteinheit am beweglichen Meßreflektor und eine Anordnung der Referenzmarkierung am stationären Referenzreflektor möglich ist.

Die über die Abtasteinheit 5 erzeugten Abtastsignale, z.B. das gewünschte Referenzimpulssignal, werden über eine Signalübertragungsleitung 20 der nachgeordneten Signalverarbeitungseinheit 9 zugeführt, die u.a. auch die verschiebungsabhängig modulierten Interferenzsignale des mindestens einen optoelektronischen Detektorelementes 7 verarbeitet. Von der Signalverarbeitungseinheit 9 aus können dann sowohl das Referenzimpulssignal als auch die interferometrisch bestimmten Positionswerte an die nachgeordnete Auswerteeinheit, z.B. an eine numerische Werkzeugmaschinensteuerung CNC übertragen werden.

Die Anordnung der Abtasteinheit 5 sowie der Referenzmarkierung an den beiden Reflektoren 3, 4 erfolgt dabei vorzugsweise dergestalt, daß im Fall identischer optischer Weglängen der Teilstrahlenbündel 10_{R}, 10_{M} in Meß- und Referenzstrahlengang das Referenzimpulssignal auf Seiten der Abtasteinheit 5 erzeugt wird. Aus diesem Grund ist es dann beispielsweise beim Einsatz der erfindungsgemäßen Positionsmeßeinrichtung in einer Werkzeugmaschine erforderlich, daß der stationäre Referenzreflektor 3 mit der Abtasteinheit 5 auf Seiten der Maschine am gewünschten Bezugspunkt, z.B. dem Maschinen-Nullpunkt, angeordnet wird. Grundsätzlich ist die Anordnung des Referenzortes bzw. im gezeigten Beispiel des stationären Referenzreflektors 3 an demjenigen Ort entlang der Meßstrecke am zweckmäßigsten, an dem etwa am häufigsten gemessen werden muß oder aber die höchste Meßgenauigkeit verlangt wird. In einer möglichen Ausführungsform kann der Referenzreflektor desweiteren in der Mitte des zu erfassenden Meßweges angeordnet werden.

Diese Art und Weise der Referenzimpulssignal-Erzeugung hat entscheidende Vorteile, da am Ort des erzeugten Referenzimpulssignales sichergestellt ist, daß die von den beiden Teilstrahlenbündeln 10_{M}, 10_{R} durchlaufenen optischen Wege im wesentlichen symmetrisch sind. Wird desweiteren durch die geeignete Dimensionierung des Strahlteilerelementes 2 gewährleistet, daß der Abstand der parallel verlaufenden Teilstrahlenbünde! klein ist, so bedeutet dies, daß weder Schwankungen in der Vakuum-Wellenlänge λ der Lichtquelle 1 noch Schwankungen in den Umgebungsbedingungen einen Einfluß auf die exakte Positionsbestimmmung an der Referenzposition haben. Desweiteren hat auch eine eventuelle temperaturbedingte Ausdehnung der Montagefläche des stationären Reflektors 3 keine Auswirkungen auf die präzise Bestimmung der Referenzposition.

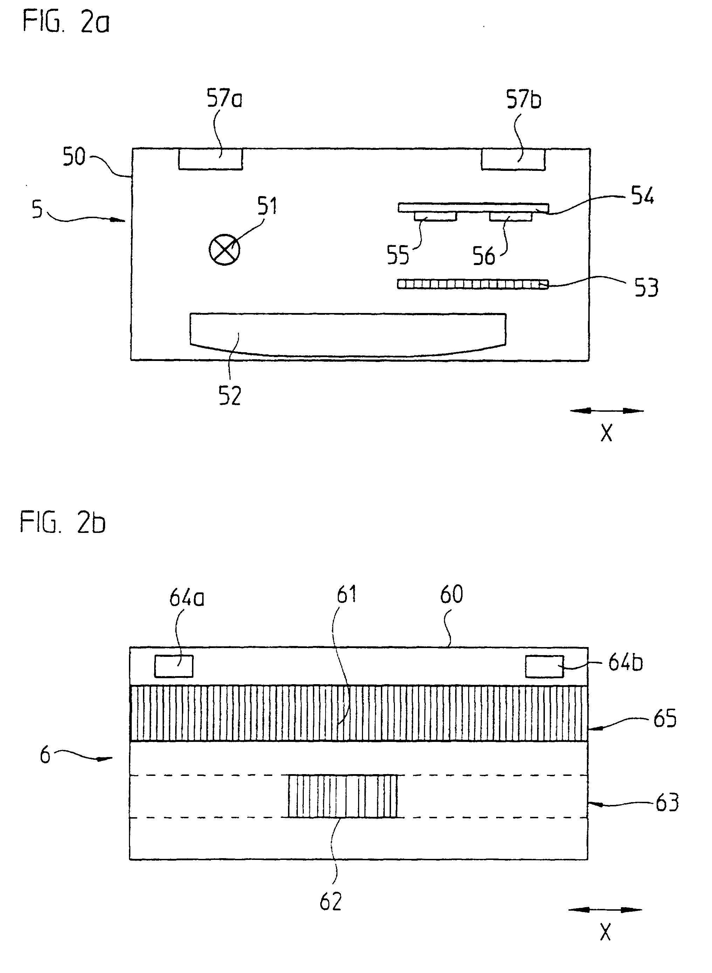

Weitere Details bezüglich der möglichen Ausgestaltung der Abtasteinheit 5 sowie der Referenzmarkierung seien nachfolgend anhand der beiden Figuren 2a und 2b erläutert. Hierbei zeigt Figur 2a in einer seitlichen Schnittansicht in schematischer Form eine mögliche Ausführungsvariante einer optischen Abtasteinheit 5, die wie erläutert am stationären Referenzreflektor 3 angeordnet ist und eine Auflicht-Abtastung einer Referenzmarkierung ermöglicht. Figur 2b zeigt in einer Draufsicht auf die Meßebene ebenfalls in schematischer Form eine mögliche Ausgestaltung der Referenzmarkierungseinheit 6 auf Seiten des beweglichen Meßreflektors, die von der Abtasteinheit aus Figur 2a abgetastet werden kann.
Bereits an dieser Stelle sei jedoch darauf hingewiesen. daß es sich hierbei lediglich um mögliche Ausführungsbeispiele von Abtasteinheit und Referenzmarkierung handelt, die in keiner Weise einschränkend für die vorliegende Erfindung zu verstehen sind. Es können demzufolge sehr wohl alternative optische Abtasteinheiten als auch Abtasteinheiten eingesetzt werden, die auf anderen physikalischen Abtastprinzipien beruhen. Das identische gilt auch für die Ausgestaltung der Referenzmarkierung.

In diesem Zusammenhang sei beispielsweise ausdrücklich auf die EP 0 513 427 B1 und die DE 197 48 802 A1 der Anmelderin verwiesen, die besonders vorteilhafte Möglichkeiten zur Erzeugung eines hochauflösenden Referenzimpulssignales beschreiben und die vorteilhafterweise in Verbindung mit der vorliegenden Erfindung zum Einsatz kommen. Insbesondere die interferentielle Erzeugung eines Referenzimpulssignales erweist sich hierbei als günstig, da damit ein äußerst schmales Referenzimpulssignal zu erhalten ist.

Die in Figur 2a schematisch dargestellte Ausführungsform der optischen Abtasteinheit 5 umfaßt ein Gehäuse 50, in dem sendeseitig eine Abtast-Strahlungsquelle 51 sowie eine vorgeordnete Optik 52 angeordnet sind. Alternativ zur gezeigten Variante kann desweiteren noch vorgesehen werden, zwischen der Strahlungsquelle 51 und der Optik 52 ein geeignetes Sendegitter anzuordnen. Das von der Optik 52 parallel gerichtete Strahlenbündel gelangt auf die in Figur 2a nicht gezeigte Referenzmarkierung und ggf. eine Inkrementalteilung, wird von dort reflektiert und tritt über das Abtastgitter 53 wieder in die Abtasteinheit 5 ein, wo nach dem nochmaligen Passieren der Optik 52 über ein oder mehrere optoelektronische Abtast-Detektorelemente 55, 56 die zurückreflektierten Strahlenbündel detektiert werden. In der Ansicht von Figur 2a sind hierbei zwei Abtast-Detektorelemente 55, 56 erkennbar, die auf einer Trägerplatine 54 angeordnet sind. Hierbei dient mindestens eines der Abtast-Detektorelemente 55 zur Detektion des Referenzimpulssignales über die optische Abtastung eines Referenzmarkierungsfeldes, während ein oder mehrere weitere Abtast-Detektorelemente 56 zur optischen Abtastung einer Inkrementalteilung vorgesehen sind, die zusätzlich zur Referenzmarkierung am beweglichen Meßreflektor angeordnet sein kann.
Ebenfalls schematisch angedeutet sind im Gehäuse 50 der Abtasteinheit 5 Langloch-Bohrungen 57a. 57b. über die die lösbare und justierbare Befestigung der Abasteinheit 5 am jeweiligen Reflektor erfolgen kann. Selbstverständlich sind auch alternative Befestigungs- und Justiermöglichkeiten für die Abtasteinheit 5 im Rahmen der vorliegenden Erfindung realisierbar.

In der schematisch angedeuteten Variante einer optischen Abtasteinheit 5 in Figur 2a ist im Gehäuse 50 der Abtasteinheit 5 eine Abtast-Strahlungsquelle 51 angeordnet. Alternativ hierzu kann auch vorgesehen werden, die Abtast-Strahiungsquelle separat bzw. entfernt vom Gehäuse anzuordnen und das gelieferte Licht z.B. über Lichtleiter der Abtasteinheit zuzuführen. Eine derartige Variante erweist sich dahingehend als vorteilhaft, als damit störende Temperatureinflüsse durch die Abtast-Strahlungsquelle in der Abtasteinheit minimiert werden können.
Im letztgenannten Fall kann desweiteren vorgesehen werden, als externe Abtast-Strahlungsquelle den Laser zu nutzen, der auch als Lichtquelle der Positionsmeßeinrichtung im Interferometer dient. Auf diese Art und Weise erübrigt sich eine zusätzliche Abtast-Strahlungsquelle. Der zur Abtastung genutzte Anteil der Lichtquellenstrahlung wird dann ebenfalls vorzugsweise über Lichtleiter der Abtasteinheit zugeführt.

Eine Draufsicht auf die Referenzmarkierungseinheit 6 mit der darin angebrachten Referenzmarkierung 62, die mit Hilfe einer Abtasteinheit gemäß Figur 2a im Auflicht abgetastet werden kann, ist in Figur 2b gezeigt. Auf einem Träger-Bauteil 60 sind hierbei parallel benachbart die Referenzmarkierung 62 in einer Referenzmarkierungsspur 63 sowie eine parallel dazu angeordnete Inkrementalteilung 61 in einer Inkrementalteilungsspur 65 vorgesehen. Im Fall der Auflicht-Abtastung bestehen die Referenzmarkierung 62 als auch die Inkrementalteilung 61 jeweils aus einer benachbarten Anordnung reflektierender und nicht-reflektierender Bereiche; im allgemeinen Fall der optischen Abtastung aus Bereichen mit unterschiedlichen optischen Eigenschaften. Während in der Inkrementalteilung 61 hierbei eine periodische Anordnung derartiger Bereiche vorgesehen ist, sind im Feld mit der Referenzmarkierung 62 diese Bereiche mit verschiedenen optischen Eigenschaften aperiodisch verteilt angeordnet.

Wie im Fall der Abtasteinheit sind auch auf Seiten der Referenzmarkierungseinheit 6 Möglichkeiten zur lösbaren und justierbaren Anordnung am jeweiligen Reflektor vorgesehen. So sind wiederum Langlochbohrungen 64a, 64b im Trägerbauteil 60 angebracht, über die sowohl eine lösbare als auch justierbare Befestigung der Referenzmarkierung 62 bzw. der Referenzmarkierungseinheit 6 am Meßreflektor möglich ist.

Die im gezeigten Ausführungsbeispiel vorgesehene zusätzliche Inkrementalteilung 61 dient zur korrekten Justage von Abtasteinheit 5 und Referenzmarkierung 62. Hierzu wird bei der Montage der erfindungsgemäßen Positionsmeßeinrichtung über die Abtastung der Inkrementalteilung 61 ein sog. Moiré-Signal erzeugt, anhand dessen die korrekte Ausrichtung von Abtasteinheit 5 und Referenzmarkierung 62 überprüft und ggf. eingestellt werden kann. Zu diesem Zweck sind auf Seiten der Abtasteinheit 5 wiederum ein oder mehrere Abtast-Detektorelemente angeordnet, die zur Erzeugung von Inkrementalsignalen bezüglich der Relativbwegung von Referenz- und Meßreflektor aus der optischen Abtastung der Inkrementalteilung dienen.

Wie bereits oben angedeutet ist insbesondere die gezeigte Variante der Abtasteinheit lediglich beispielhaft zu verstehen, d.h. es kommen sehr wohl alternative Abtastvarianten zur Erzeugung des Referenzimpulssignales im Rahmen der vorliegenden Erfindung in Betracht. Hierzu zählt etwa die erwähnte interferentielle Erzeugung eines hochauflösenden Referenzimpulssignales im Bereich der Interferometer-Signalperiode, eine Auflicht-Abtastung einer Referenzmarkierung, die Verwendung sog. gechirpter Teilungsstrukturen etc..
Ebenso sei darauf hingewiesen. daß selbstverständlich auch diverse bekannte Varianten zur Erzeugung von sog. Takt- und Gegentakt-Referenzimpulssignalen zum Einsatz kommen können, um die Detektionssicherheit zu erhöhen.

Die erfindungsgemäße Positionsmeßeinrichtung kann etwa als Einbaumeßsystem in einer Werkzeugmaschine verwendet werden, um z.B. die Relativposition von Werkzeug und Werkstück hochexakt zu bestimmen. Hierbei wird dann der Meßreflektor mit einem beweglichen Teil der Werkzeugmaschine verbunden, während der restliche Teil des Interferometer-Aufbaus am stationären Teil der Werkzeugmaschine angeordnet ist.

## Patentansprüche

1. Positionsmeßeinrichtung zur Bestimmung der Position zweier in Meßrichtung (x) relativ zueinander beweglicher Teile mit
- einer Lichtquelle (1),
- einem Strahlteilerelement (2), das das von der Lichtquelle (1) ausgesandte Strahlenbündel (10) in mindestens ein erstes und ein zweites Teilstrahlenbündel (10_{R}, 10_{M}) aufteilt, die nach Austritt aus dem Strahlteilerelement (2) parallel zueinander orientiert sind,
- einem stationären Referenzreflektor (3), angeordnet in einem Referenzstrahlengang, auf den das erste der beiden Teilstrahlenbündel (10_{R}) auftrifft,
- einem in Meßrichtung (x) beweglichen Meßreflektor (4), angeordnet in einem Meßstrahlengang, auf den das zweite der beiden Teilstrahlenbündel (10_{M}) auftrifft, wobei
- am Referenzreflektor (3) oder am Meßreflektor (4) mindestens eine Referenzmarkierung (62) angeordnet ist, die von einer Abtasteinheit (5) abtastbar ist, um am Ort des Referenzreflektors (3) ein Referenzimpulssignal zu erzeugen und die Abtasteinheit (5) am jeweils anderen Reflektor (3, 4), d.h. am Meßreflektor (4) oder am Referenzreflektor (3) angeordnet ist.

2. Positionsmeßeinrichtung nach Anspruch 1, wobei die Anordnung der Referenzmarkierung (62) am jeweiligen Reflektor (3, 4) derart erfolgt, daß über die am anderen Reflektor (3, 4) angeordnete Abtasteinheit (5) ein Referenzimpulssignal bei identischen optischen Weglängen im Meß- und Referenzstrahlengang erzeugbar ist.

3. Positionsmeßeinrichtung nach Anspruch 1, wobei die Referenzmarkierung (62) am beweglichen Meßreflektor (4) angeordnet ist und die Abtasteinheit (5) am stationären Referenzreflektor (3) angeordnet ist.

4. Positionsmeßeinrichtung nach Anspruch 1, wobei das Strahlteilerelement (2) als Prisma ausgebildet ist.

5. Positionsmeßeinrichtung nach Anspruch 1, wobei das Strahlteilerelement (2) als Zwei-Gitter-Strahlteiler ausgebildet ist.

6. Positionsmeßeinrichtung nach Anspruch 1, wobei der Meßreflektor (4) und der Referenzreflektor (3) jeweils als Tripelprisma ausgebildet sind.

7. Positionsmeßeinrichtung nach Anspruch 1, wobei die Abtasteinheit (5) als optische Abtasteinheit ausgebildet ist, die eine Abtast-Strahlungsquelle (51), ein Abtastgitter (53) sowie mindestens ein Abtast-Detektorelement (55, 56) umfaßt, über die die optische Abtastung mindestens einer Referenzmarkierung (62) möglich ist.

8. Positionsmeßeinrichtung nach Anspruch 1, wobei die Abtasteinheit (5) als optische Abtasteinheit ausgebildet ist, der Licht einer externen Abtast-Strahlungsquelle zuführbar ist und ein Abtastgitter sowie mindestens ein Abtast-Detektorelement umfaßt, über die die optische Abtastung mindestens einer Referenzmarkierung (62) möglich ist.

9. Positionsmeßeinrichlung nach Anspruch 8, wobei als externe Abtast-Strahlungsquelle ein Laser dient, der auch als Lichtquelle (1) der Positionsmeßeinrichtung vorgesehen ist.

10. Positionsmeßeinrichtung nach Anspruch 1 und 7 oder 8, wobei die Referenzmarkierung (62) in einer Referenzmarkierungseinheit (6) angeordnet ist, die desweiteren eine Inkrementalteilung (61) umfaßt, und auf Seiten der Abtasteinheit (5) auch Abtast-Detektorelemente (56) zur Erzeugung von Inkrementalsignalen bezüglich der Relativbewegung von Referenz- und Meßreflektor (3, 4) aus der optischen Abtastung der Inkrementalteilung (61) angeordnet sind.

11. Pösitionsmeßeinrichtung nach Anspruch 10, wobei die Referenzmarkierung (62) als Feld mit alternierend angeordneten Teilbereichen mit unterschiedlichen optischen Eigenschaften in einer Rereferenzmarkierungsspur (63) ausgebildet ist, neben der parallel eine Inkrementalteilung (61) in einer Inkrementalteilungsspur (65) benachbart angeordnet ist, die aus einer periodischen Abfolge von Teilbereichen mit unterschiedlichen optischen Eigenschaften besteht.

12. Positionsmeßeinrichtung nach Anspruch 1, wobei die Abtasteinheit (5) lösbar am jeweiligen Reflektor (3, 4) angeordnet ist.

13. Positionsmeßeinrichtung nach Anspruch 1, wobei die Referenzmarkierung (62) in einer Referenzmarkierungseinheit (6) angeordnet ist, die wiederum lösbar am jeweiligen Reflektor (3, 4) angeordnet ist.

14. Positionsmeßeinrichtung nach Anspruch 13 oder 14, wobei die Abtasteinheit (5) und/oder die Referenzmarkierungeinheit (6) lagemäßig justierbar am Referenz- oder Meßreflektor (3, 4) angeordnet sind.

15. Positionsmeßeinrichtung nach Anspruch 1, wobei die Ausgangssignale der Abtasteinheit (5) über eine Signalübertragungsleitung (20) einer nachgeordneten Signalverarbeitungseinheit (9) zuführbar sind.

16. Positionsmeßeinrichtung nach mindestens einem der vorangehenden Ansprüche, wobei der Referenzreflektor (3) an der gewünschten Absolutposition entlang des Meßweges angeordnet ist.

## Claims

1. Position measuring device for determining the position of two parts which are movable relative to one another in measuring direction (x), comprising
- a light source (1),
- a beam-splitter element (2), which splits the beam of rays (10) emitted by the light source (1) into at least one first and one second beam component (10_{R}, 10_{M}), which are oriented parallel to one another after leaving the beam-splitter element (2),
- a stationary reference reflector (3), arranged in a reference path of rays, upon which the first of the two beam components (10_{R}) impinges,
- a measuring reflector (4) which is arranged in a measuring path of rays and which is movable in measuring direction (x) and upon which the second of the two beam components (10_{M}) impinges,
- at least one reference marking (62), capable of being scanned by a scanning unit (5), being arranged at the reference reflector (3) or at the measuring reflector (4) to produce a reference pulse signal at the location of the reference reflector (3), and the scanning unit (5) being arranged at the other reflector (3, 4), i.e. at the measuring reflector (4) or at the reference reflector (3).

2. Position measuring device according to claim 1, wherein the reference marking (62) is arranged at the respective reflector (3, 4) in such a way that a reference pulse signal is able to be produced via the scanning unit (5) arranged at the other reflector (3, 4), in response to identical optical path lengths in the optical measuring and reference ray paths.

3. Position measuring device according to claim 1, wherein the reference marking (62) is arranged at the movable measuring reflector (4) and the scanning unit is arranged at the stationary reference reflector (3).

4. Position measuring device according to claim 1, wherein the beam-splitter element (2) is designed as a prism.

5. Position measuring device according to claim 1, wherein the beam-splitter element (2) is designed as a double-grating beam splitter.

6. Position measuring device according to claim 1, wherein the measuring reflector (4) and the reference reflector (3) are both designed as triple prisms.

7. Position measuring device according to claim 1, wherein the scanning unit (5) is designed as an optical scanning unit which includes a scanning radiation source (51), a scanning grating (53), as well as at least one scanning detector element (55, 56), by means of which the optical scanning of at least one reference marking (62) is possible.

8. Position measuring device according to claim 1, wherein the scanning unit (5) is designed as an optical scanning unit which is able to be supplied with light from an external scanning radiation source and which includes a scanning grating as well as at least one scanning detector element, by means of which the optical scanning of at least one reference marking (62) is possible.

9. Position measuring device according to claim 8, wherein a laser, which is also provided as the light source (1) of the position measuring device, is used as an external scanning radiation source.

10. Position measuring device according to claim 1 and 7 or 8, wherein the reference marking (62) is arranged in a reference marking unit (6), which includes in addition an incremental graduation (61), and scanning detector elements (56) are also arranged on sides of the scanning unit (5) to produce incremental signals in respect of the relative movement of the reference and measuring reflectors (3, 4) from the optical scanning of the incremental graduation (61).

11. Position measuring device according to claim 10, wherein the reference marking (62) is configured as a field having subregions with different optical properties and arranged alternating in a reference marking track (63), next to which is arranged adjacently, in parallel, an incremental graduation (61) in an incremental graduation track (65), which is made up of a periodic sequence of subregions having different optical properties.

12. Position measuring device according to claim 1, wherein the scanning unit (5) is arranged detachably at the respective reflector (3, 4).

13. Position measuring device according to claim 1, wherein the reference marking (62) is arranged in a reference-marking unit (6), which is disposed, in turn, detachably at the respective reflector (3, 4).

14. Position measuring device according to claim 13 or 14, wherein the scanning unit (5) and/or the reference-marking unit (6) are/is arranged so as to be adjustable with respect to position at the reference or measuring reflector (3, 4).

15. Position measuring device according to claim 1, wherein the output signals from the scanning unit (5) are able to be supplied via a signal-transmission line (20) to a downstream signal-processing unit (9).

16. Position measuring device according to at least one of the preceding claims, wherein the reference reflector (3) is arranged at the desired absolute position along the measuring path.

## Revendications

1. Dispositif de mesure de position pour déterminer la position de deux objets mobiles l'un par rapport à l'autre dans la direction de mesure (x), comprenant
- une source de lumière (1),
- un élément diviseur de rayons (2) qui divise le faisceau de rayons (10) émis par la source de lumière (1) en au moins un premier et un second faisceaux partiels de rayons (10_{R}, 10_{M}) qui sont orientés parallèlement entre eux après leur sortie de l'élément diviseur de rayons (2),
- un réflecteur de référence (3) stationnaire qui est disposé dans un trajet de rayons de référence et sur lequel tombe le premier des deux faisceaux partiels de rayons (10_{R}),
- un réflecteur de mesure (4) qui est mobile dans la direction de mesure (x),qui est disposé dans un trajet de rayons de mesure et sur lequel tombe le second des deux faisceaux partiels de rayons (10_{M}),
- le réflecteur de référence (3) ou le réflecteur de mesure (4) portant au moins une marque de référence (62) qui peut être explorée par une unité d'exploration (5) pour produire un signal de référence à l'endroit du réflecteur de référence, l'unité d'exploration (5) étant disposée sur l'autre réflecteur (3, 4), c'est-à-dire sur le réflecteur de mesure (4) ou sur le réflecteur de référence (3).

2. Dispositif de mesure de position suivant la revendication 1, la disposition de la marque de référence (62) sur le réflecteur (3, 4) respectif étant telle qu'un signal d'impulsion de référence puisse être produit par l'unité d'exploration (5) disposée sur l'autre réflecteur (3, 4) en cas de longueurs de trajets optiques identiques dans les trajets de rayons de mesure et de référence.

3. Dispositif de mesure de position suivant la revendication 1, la marque de référence (62) étant disposée sur le réflecteur de mesure (4) mobile et l'unité d'exploration (5) sur le réflecteur de référence (3) stationnaire.

4. Dispositif de mesure de position suivant la revendication 1, l'élément diviseur de rayons (2) étant réalisé sous forme de prisme.

5. Dispositif de mesure de position suivant la revendication 1, l'élément diviseur de rayons (2) étant réalisé sous forme de diviseur de rayons à deux réseaux.

6. Dispositif de mesure de position suivant la revendication 1, le réflecteur de mesure (4) et le réflecteur de référence (3) étant réalisés chacun sous forme de prisme réflecteur à triple surface de réflexion.

7. Dispositif de mesure de position suivant la revendication 1, l'unité d'exploration (5) étant réalisée sous forme d'unité d'exploration optique comprenant une source de rayonnement d'exploration (51), un réseau d'exploration (53) ainsi qu'au moins un élément détecteur d'exploration (55, 56), permettant l'exploration optique d'au moins une marque de référence (62).

8. Dispositif de mesure de position suivant la revendication 1, l'unité d'exploration étant réalisée sous forme d'unité d'exploration optique à laquelle peut être envoyée la lumière d'une source externe de rayonnement d'exploration et qui comprend un réseau d'exploration ainsi qu'au moins un élément détecteur d'exploration, permettant l'exploration optique d'au moins une marque de référence (62).

9. Dispositif de mesure de position suivant la revendication 8, la source externe de rayonnement d'exploration étant un laser qui sert également de source de lumière (1) pour le dispositif de mesure de position.

10. Dispositif de mesure de position suivant revendication 1 et 7 ou 8, la marque de référence (62) étant disposée dans une unité de marque de référence (6) comprenant en outre une graduation incrémentale (61), et des éléments détecteurs d'exploration (56) étant disposés sur le côté de l'unité d'exploration (5) pour la production de signaux incrémentaux en réponse au mouvement relatif des réflecteurs de référence et de mesure (3, 4) sur la base de l'exploration optique de la graduation incrémentale.

11. Dispositif de mesure de position suivant la revendication 10, la marque de référence étant réalisée sous la forme d'un champ avec des zones partielles alternées ayant des propriétés optiques différentes dans une piste de marque de référence (63) à côté de laquelle, et parallèlement à cette dernière, une graduation incrémentale (61) est disposée en une piste de graduation incrémentale (65) voisine qui se compose d'une succession périodique de zones partielles ayant des propriétés optiques différentes.

12. Dispositif de mesure de position suivant la revendication 1, l'unité d'exploration (5) étant disposée de façon amovible sur le réflecteur (3, 4) respectif.

13. Dispositif de mesure de position suivant la revendication 1, la marque de référence (62) étant disposée dans une unité de marque de référence (6) qui est disposée de façon amovible sur le réflecteur (3, 4) respectif.

14. Dispositif de mesure de position suivant la revendication 12 ou 13, l'unité d'exploration (5) et/ou l'unité de marque de référence (6) étant disposées de façon réglable en position sur le réflecteur de référence ou de mesure (3, 4).

15. Dispositif de mesure de position suivant la revendication 1, les signaux de sortie de l'unité d'exploration (5) pouvant être transmis par une ligne de transmission de signaux (20) à une unité de traitement de signaux (9) montée à la suite.

16. Dispositif de mesure de position suivant au moins l'une des revendications précédentes, le réflecteur de référence (3) étant disposé à la position absolue recherchée le long du trajet de mesure.
